# EUROPÄISCHE PATENTSCHRIFT

(11) **EP 3 102 041 B1**
(45) Veröffentlichungstag und Bekanntmachung des Hinweises auf die Patenterteilung: **03.04.2019**
(21) Anmeldenummer: 14702573.8
(22) Anmeldetag: 03.02.2014
(51) Int. Cl.: A22C 25/16

(54) **VERFAHREN UND VORRICHTUNG ZUM MASCHINELLEN GEWINNEN DES FLEISCHES VON FISCHEN**
METHOD AND DEVICE FOR MECHANICALLY OBTAINING MEAT FROM FISH
PROCÉDÉ ET DISPOSITIF POUR RECUEILLIR MÉCANIQUEMENT LA CHAIR DE POISSONS

(43) Veröffentlichungstag der Anmeldung: 14.12.2016
(73) Patentinhaber: Nordischer Maschinenbau Rud. Baader GmbH + Co. KG, 23560 Lübeck (DE)
(72) Erfinder: BRAEGER, Horst, 23560 Lübeck (DE)
(74) Vertreter: Stork Bamberger Patentanwälte PartmbB
(86) Internationale Anmeldenummer: PCT/EP2014/051999
(87) Internationale Veröffentlichungsnummer: WO 2015/113639

(56) Entgegenhaltungen:
- EP-B1- 0 693 256
- DE-A1- 2 248 536
- DE-A1-102012 015 242
- DE-B3- 10 303 519
- DE-U1- 20 014 211

## Beschreibung

Die Erfindung betrifft ein Verfahren und eine Vorrichtung zum maschinellen Gewinnen des Fleisches von geschlachteten und an der Bauchhöhle geöffneten Fischen, insbesondere von Fischarten, die sich von der Wirbelsäule in das Fischfleisch erstreckende Fleischgräten, sogenannte Pinbones, aufweisen, beispielsweise von Lachs (salmo salar) oder Weißfisch.

Zum Gewinnen der Filets von Fischen ist es bekannt, die Bauch- und Rückenspeichen bzw. -gräten der Fische durch zwei im Abstand voneinander angeordnete rotierende Kreismesserpaare sowohl von oben als auch von unten bis zu den Wirbeln des Rückgrats einzuschneiden, die Filets im Bereich der Bauchhöhle durch Rippenschnitte von den seitlichen Wirbelfortsätzen und Rippen bzw. Flankengräten freizuschneiden und durch Abtrennen des Fleischstreifens von der Schwanzwurzel bis hinter die Bauchhöhle völlig vom Grätengerüst zu trennen. Eine Filetiermaschine zur Durchführung dieses Verfahrens, bei dem ein Förderer, der in Abständen mit Schubsätteln zur Aufnahme der geschlachteten Fische ausgestattet ist, die Fische mit dem Schwanz voraus durch einen Bearbeitungsbereich fördert, ist aus der DE 29 12 982 C2 bekannt. Zur Durchführung eines effektiven Filetierprozesses, bei dem von Fischen der oben beschriebenen Art fleischgrätenfreie Filets gewonnen werden sollen, wird in der DE 22 48 536 A ein Verfahren vorgeschlagen, bei dem nach der Durchführung der Rückenschnitte und dem Schaben des Fleisches von den Wirbelfortsätzen das Fleisch dicht oberhalb der Fleischgräten abgeschabt und dann von den Rippen und gegebenenfalls Bauchspeichen abgetrennt wird. Ähnliche Verfahren sind auch aus den Dokumenten EP 0 693 256 und DE 200 14 211 U1 bekannt.

Eine weitere Vorrichtung zur Herstellung fleischgrätenfreier Fischfilets ist aus der DE 35 18 960 C1 bekannt. Während des Filetierprozesses werden mittels Kreismesser im Wesentlichen senkrecht zu der Symmetrieebene des Fisches oberhalb der Fleischgräten bis an die Rückenspeichen seitliche Einschnitte ausgeführt, wodurch in Fortführung des Filetierprozesses die grätenfreien Filets und die Bauchlappen jeweils separat anfallen. Schließlich ist aus der DE 36 32 561 C2 eine Vorrichtung zum Gewinnen fleischgrätenfreier Fischfilets bekannt, bei der während des Filetierens durch zwei rotierende, im Abstand zueinander angeordnete Kreismesser oberhalb und unterhalb der Fleischgräten etwa senkrecht zur Symmetrieebene des Fisches verlaufende Einschnitte bis an die Rippen bzw. die seitlichen Wirbelfortsätze geführt werden. Ein Stichelmesser, das den Zwischenraum zwischen den Fleischgrätenmessern ausfüllt, trennt den die Fleischgräten enthaltenen Fleischstreifen heraus. Auf diese Weise erhält man Filets, die frei von Fleisch- und anderen Gräten sind, an denen jedoch der Bauchlappen haftet. Das ist bei der Gewinnung von fleischgrätenfreien Fischfilets unerwünscht.

Im Gegensatz zu den bekannten Verfahren zum Gewinnen fleischgrätenfreier Fischfilets, bei denen die Fleischgräten von der Wirbelsäule abgetrennt und anschließend in einem gesonderten Arbeitsgang entfernt werden, wird in der DE 101 16 248 A ein Verfahren zum Filetieren geschlachteter und an der Bauchhöhle geöffneter Fische vorgeschlagen, bei dem die Pinbones an der Wirbelsäule belassen und in einem separaten Arbeitsschritt unter Ausübung relativer Verformungskräfte zwischen den Pinbones und den sie umgebenden Fleischbereichen aus dem Fischfleisch herausgezogen werden. Im Laufe des Verfahrens werden die Pinbones aus ihrer ursprünglich im Wesentlichen senkrecht zur Wirbelsäule stehenden Position in Richtung der Wirbelsäule gedrückt, bis sie eine etwa parallele Stellung zu dieser einnehmen. Durch diese Verformung und damit verbundene Belastung der Pinbones besteht die Gefahr, dass die Pinbones von der Wirbelsäule gelöst und während des Herausziehens aus dem Fischfleisch von dieser abreißen. Dadurch verbleiben die Fleischgräten ganz oder teilweise im Fischfleisch, was eine Qualitätsminderung der gewonnenen Fischfilets bedeutet.

Entsprechend effektiver Fischverarbeitungstechnologien besteht deshalb die Aufgabe der Erfindung darin, die bekannten Filetier- und Entgrätungsverfahren derart zu ergänzen und weiter zu entwickeln, dass im Ergebnis des Bearbeitungsprozesses ein fleischgrätenfreies Fischfilet ohne jegliche Grätenrückstände im Fischfleisch und Beschädigung des Fischfleisches entsteht.

Diese Aufgabe wird gelöst durch ein Verfahren mit den in Anspruch 1 angegebenen Merkmalen sowie durch eine Vorrichtung mit den in Anspruch 7 angegebenen Merkmalen. Bevorzugte Ausführungsformen ergeben sich aus den zugehörigen Unteransprüchen sowie der nachfolgenden Beschreibung und den beigefügten Figuren.

Das erfindungsgemäße Verfahren dient zum maschinellen Gewinnen des Fleisches von Fischen, d. h. zum Filetieren von Fischen. Gemäß diesem Verfahren werden durch das Einbringen von Schnitten die Rückengräten und die bauchwärts gerichteten Gräten zunächst von den seitlich gelegenen Filets frei geschnitten. Dies ist grundsätzlich vom maschinellen Filetieren von Fischen her bekannt. In der Schwimmlage des Fisches gesehen erstrecken sich die Rückengräten im Wesentlichen in vertikaler Richtung. Im Schwanzbereich des Fisches erstrecken sich auch die bauchwärts gerichteten Gräten im Wesentlichen in vertikaler Richtung. Seitlich der Bauchhöhle erstrecken sich die Gräten im Wesentlichen schräg nach unten. An beiden Seiten außerhalb der Gräten, d. h. an den einander abgewandten Außenseiten der Gräten und der Wirbelsäule sind die Filets gelegen. Erfindungsgemäß werden die Schnitte so eingebracht, dass vorhandene Fleischgräten, welche sich quer zu den Rückengräten in das Fleisch hinein erstrecken, nicht von der Wirbelsäule oder im Falle von Weißfisch von den sich von der Wirbelsäule weg erstreckenden Flankengräten abgetrennt werden. D. h. die Fleischgräten verbleiben mit der Wirbelsäule verbunden und stecken nach dem Einbringen der Schnitte im Fleisch der Filets.

Im nächsten Schritt werden erfindungsgemäß die von den Schnitten gebildeten Trennfugen zwischen den genannten Gräten und dem Fleisch des Filets verbreitert. D. h. die Trennfugen werden in einer Richtung quer zu den Rückengräten und quer zur Längserstreckung des Fisches, welche in Richtung seiner Wirbelsäule verläuft, verbreitert. Dabei werden die seitlich der Wirbelsäule gelegenen Filets in seitlicher Richtung, d. h. in einer Richtung quer zur Längserstreckung der Wirbelsäule und quer zu den Rückengräten von der Wirbelsäule des Fisches weg bewegt. Dabei werden die an beiden Seiten der Wirbelsäule gelegenen Filets auseinander bewegt. Bei dieser Seitwärtsbewegung werden die Filets von den sich seitlich von der Wirbelsäule oder den Flankengräten weg erstreckenden Fleischgräten abgezogen. D. h. durch die Relativbewegung zwischen Filets und Wirbelsäule in seitlicher Richtung werden die an der Wirbelsäule bzw. den Flankengräten verbleibenden Fleischgräten aus dem Fleisch herausgezogen. So wird ein grätenfreies Filet geschaffen und sämtliche Gräten verbleiben an der Wirbelsäule.

Vorzugsweise werden in die geschlachteten und an der Bauchhöhle geöffneten Fische im Bereich des Fischrückens zwei sich in Längsrichtung des Fisches erstreckende, die Rückengräten freischneidende Rückenschnitte, im Bereich der Bauchhöhle zwei die Flankengräten freischneidende Flankenschnitte und zwei vom Schwanzende bis an das Bauchhöhlenende reichende, sich in Längsrichtung des Fisches erstreckende und die bauchwärts gerichteten Gräten freischneidende Trennschnitte eingebracht. Durch diese Schnitte werden die Filets von den Gräten getrennt, sodass lediglich die Fleischgräten vor der Seitwärtsbewegung der Filets im Fleisch verbleiben.

Besonders bevorzugt werden die Trennfugen von einem Längsende des Fisches, vorzugsweise vom Schwanzende ausgehend verbreitert. Dabei erfolgt die Verbreiterung bzw. Vergrößerung der Trennfugen vorzugsweise keilförmig und kontinuierlich ausgehend von dem Längsende, sodass die beiden seitlichen Filets in Schwimmlage des Fisches gesehen horizontal und in einer Richtung quer zur Wirbelsäule verdrängt und dabei vom Grätengerüst abgestreift und von den Fleischgräten abgezogen werden. Dabei kann die seitliche Verdrängung bzw. das seitliche Abstreifen der Filets von dem Skelett des Fisches rechtwinklig oder spitzwinklig zu dessen Wirbelsäule erfolgen.

Die eingebrachten Rückenschnitte enden zweckmäßigerweise oberhalb der Fleischgräten, sodass die Fleischgräten nicht von der Wirbelsäule abgetrennt werden. Entsprechend werden die die Flankengräten freischneidenden Schnitte vorzugsweise von unten so eingebracht, dass sie sich ebenfalls nur soweit erstrecken, dass die Fleischgräten nicht durchtrennt oder abgetrennt werden.

Das Verbreitern der Trennfugen zum seitlichen Weg bewegen der Filets erfolgt erfindungsgemäß in der Weise, dass der Fisch in seiner Längsrichtung mit einem Längsende voran, vorzugsweise mit dem Schwanzende voran, auf zwei sich in Längsrichtung erstreckende und sich in eine Richtung quer zu dieser Längsrichtung keilförmig erweiternde Filetabweiser aufgeschoben wird, welche dabei in die von den Schnitten gebildeten Trennfugen eintreten und diese verbreitern. Wenn der Fisch in seiner Schwimmlage verarbeitet bzw. filetiert wird, sind die Filetabweiser so ausgebildet, dass sie sich in einer im Wesentlichen horizontalen Ebene keilförmig verbreitern, d. h. in einer seitlichen Richtung quer zu den Längsgräten und der Wirbelsäule des Fisches verbreitern.

Erfindungsgemäß werden die Fleischgräten in Längsschlitzen bzw. Aufnahmefugen in den Filetabweisern bei deren Vorschub geführt. Die Schlitze erstrecken sich vorzugsweise über die Länge der Filetabweiser und sind zu einem, d. h. dem vorderen Längsende, welches zuerst mit dem Fisch in Kontakt kommt, geöffnet, sodass die Fleischgräten, wenn der Fisch und die Filetabweiser aufeinander zu bewegt werden, beim Seitwärtsbewegen der Filets in die Längsschlitze eintreten. So werden die Fleischgräten geführt, wenn sie durch die Seitwärtsbewegung der Filets aus diesen herausgezogen werden. So kann ein Abbrechen der Fleischgräten verhindert werden.

Neben dem Verfahren ist Gegenstand der Erfindung auch eine Vorrichtung zum maschinellen Gewinnen des Fleisches von Fischen bzw. zum Filetieren von Fischen. Die Vorrichtung ist insbesondere zur Ausführung des vorangehend beschriebenen Verfahrens geeignet.

Die erfindungsgemäße Vorrichtung weist eine Aufnahmeeinrichtung auf, welche ausgebildet ist zur Aufnahme und zum Halten der zu verarbeitenden Fische. Die Aufnahmevorrichtung kann insbesondere als Sattel ausgebildet sein, auf welchen der Fisch mit der geöffneten Bauchhöhle aufgesetzt wird. Dabei wird der Fisch vorzugsweise in seiner Schwimmlage in der Maschine gehalten und verarbeitet. Es ist jedoch auch denkbar, den Fisch in anderer Lage zu bearbeiten. Dann sind die nachfolgend angegebenen Richtungsangaben als entsprechend gegenüber der Schwimmlage gedreht zu verstehen. Die erfindungsgemäße Vorrichtung weist ferner Messer auf, welche angeordnet und ausgebildet sind zum Einbringen von Schnitten, welche die Rückengräten und die bauchwärts gerichteten Gräten von den seitlich gelegenen Filets freischneiden. Derartige Messeranordnungen sind zum maschinellen Filetieren von Fischen bekannt.

Ferner weist die Vorrichtung zwei Filetabweiser auf, welche relativ zu der Aufnahmeeinrichtung derart bewegbar sind, dass sie in den von den Schnitten gebildeten Trennfugen eintreten und eine seitliche Bewegung des Filets quer zu den Rückengräten des Fisches und weg von der Wirbelsäule veranlassen. In Schwimmlage des Fisches gesehen veranlassen die Filetabweiser somit eine Bewegung der Filets in horizontaler Richtung seitlich von der Wirbelsäule weg. Dazu ist eine Relativbewegung zwischen der Wirbelsäule und den dem Filet zugewandten Seiten der Filetabweiser erforderlich, welche durch eine keilförmige Geometrie der Filetabweiser, wie sie weiter unten beschrieben wird, erreicht werden kann.

Bevorzugt wird der Fisch durch die Vorrichtung bewegt. Dazu ist die Aufnahmeeinrichtung bevorzugt zum Fördern des aufgenommenen Fisches in dessen Längsrichtung, d. h. in Richtung dessen Wirbelsäule bewegbar.

Dabei ist weiter bevorzugt die Aufnahmeeinrichtung relativ zu den Messern derart bewegbar, dass die Messer durch das Fleisch des aufgenommenen Fisches geführt werden. D. h. die Messer sind feststehend angeordnet, während der Fisch in seiner Längsrichtung relativ zu den feststehenden Messern bewegt wird. Dabei kann es sich allerdings um rotierende Messer bzw. Schneidwerkzeuge handeln.

Weiter bevorzugt sind die Messer derart angeordnet und/oder geführt, dass die sich von der Wirbelsäule oder den Flankengräten des Fisches seitlich weg erstreckenden Fleischgräten von den Messern nicht durchschnitten werden. D. h. die die Rückenschnitte ausbildenden oberen Messer sind so angeordnet, dass ihre Unterkante oberhalb der Fleischgräten endet. Entsprechend sind die unteren, die von der Bauchseite her geführten Schnitte ausbildenden Messer so angeordnet, dass ihre Oberkanten unterhalb der Fleischgräten enden. So wird sichergestellt, dass die Fleischgräten nicht vom übrigen Skelett abgetrennt werden.

Die Vorrichtung weist vorzugsweise zwei parallel beabstandete Rückenmesser auf, welche angeordnet und ausgebildet sind zum Einbringen zweier Rückenschnitte seitlich der Rückengräten des Fisches, sodass diese von den seitlichen Filets frei geschnitten werden, wobei die Rückenmesser oberhalb der Fleischgräten gelegen sind, sodass diese nicht durchtrennt werden. Die Rückenmesser sind seitlich beabstandet und bilden bevorzugt nicht genau parallel zueinander verlaufende Schnitte aus. Vielmehr sind die Schnitte bevorzugt in vertikaler Richtung gesehen spitzwinklig zueinander angeordnet.

Ferner weist die Vorrichtung vorzugsweise Messer auf, welche angeordnet und ausgebildet sind zum Ausführen von unten geführter Schnitte, insbesondere zweier im Bereich der Bauchhöhle die Flankengräten freischneidender Flankenschnitte und zweier vom Schwanzende bis an das Bauchhöhlenende reichender, sich in Längsrichtung des Fisches erstreckender und die bauchwärts gerichteten Gräten freischneidender Trennschnitte. Derartige Messeranordnungen zum Ausbilden solcher Schnitte sind grundsätzlich bekannt. Erfindungsgemäß ist jedoch bevorzugt, dass die Messer so angeordnet sind, dass ihre Schnitte die Fleischgräten nicht erreichen und insbesondere nicht durchtrennen. D. h. die Messer sind so angeordnet, dass die Schnitte in Schwimmlage des Fisches gesehen unterhalb der Fleischgräten enden.

Weiter bevorzugt sind die Filetabweiser und die Aufnahmeeinrichtung in der Längsrichtung eines aufgenommenen Fisches, d. h. in Richtung dessen Wirbelsäule, relativ zueinander bewegbar, wobei vorzugsweise die Filetabweiser in Längsrichtung feststehend angeordnet sind. Durch die Relativbewegung treten die Filetabweiser, wie oben beschrieben, in die ausgebildeten Schnitte ein. Dort veranlassen sie eine Verbreiterung der Schnitte bzw. der von den Schnitten gebildeten Trennfugen, sodass die Filets in seitlicher Richtung von der Wirbelsäule weg bewegt werden. Dies kann durch eine Seitwärtsbewegung der Filetabweiser erfolgen.

Erfindungsgemäß sind die Filetabweiser derart keilförmig ausgebildet, dass sie sich ausgehend von einem ersten Längsende zu einem zweiten Längsende quer zur Längsrichtung verbreitern. Dabei verbreitern sich die Filetabweiser in der Querrichtung, in welcher die Filets von der Wirbelsäule weg bewegt werden sollen, d. h. in einer Richtung quer zu den Rückengräten, was in Schwimmlage des Fisches im Wesentlichen einer horizontalen Richtung entspricht. Das erste Längsende der Filetabweiser ist dabei das vordere Ende, welches zuerst in die zwischen Gräten und Fleisch gebildete Trennfuge eintritt. Bei weiterem Vorschub des Fisches auf dem Filetabweiser wird aufgrund der keilförmigen Form so die Trennfuge kontinuierlich erweitert und das Filet seitwärts von den Gräten bzw. dem Skelett weg bewegt, wobei die Fleischgräten, welche fest mit dem übrigen Skelett verbunden sind, schonend aus dem Filet herausgezogen werden.

Besonders bevorzugt verbreitern sich die Filetabweiser um ein Maß, welches größer als die Länge der Fleischgräten der zu verarbeitenden Fische ist. Dadurch wird sichergestellt, dass die Filets durch die Filetabweiser vollständig von den Fleischgräten abgezogen werden. Ein vollständiges Herausziehen der Fleischgräten aus dem Filet ist jedoch auch bei einer geringeren Verbreiterung der Filetabweiser möglich, wenn die Fleischgräten gleichzeitig in vertikaler Richtung umgelenkt werden, was beispielsweise durch die unten beschriebene Führung der Fleischgräten möglich ist.

Die Filetabweiser sind vorzugsweise in einer Vorschubrichtung der Fische jeweils hinter zumindest einem Messer angeordnet und fluchten vorzugsweise mit diesem Messer. So können die Fische zunächst an den Messern entlang geführt werden, wodurch die beschriebenen Schnitte eingebracht werden, und bei weiterer Linearbewegung treten die nachfolgend angeordneten Filetabweiser aufgrund der fluchtenden Anordnung zu den Messern direkt in die gebildeten Schnitte ein.

Weiterhin weisen die Filetabweiser erfindungsgemäß jeweils eine über die Längserstreckung des Filetabweisers verlaufende und sich in ihrer Querausdehnung quer zu der Längserstreckung durch den Filetabweiser hindurch erstreckende Aufnahmefuge auf, welche derart angeordnet ist, dass bei Relativbewegung des Fisches die Fleischgräten in der Aufnahmefuge geführt werden. D. h. die Aufnahmefugen erstrecken sich in Querrichtung vollständig durch die Filetabweiser hindurch, sodass der Filetabweiser zwischen Filet und Wirbelsäule bewegt werden kann, wobei sich die Fleischgräten, welche mit einem Ende an der Wirbelsäule bzw. an den an die Wirbelsäule anschließenden Flankengräten festsitzen und sich mit ihrem anderen Ende in das Fleisch hinein erstrecken, durch die Aufnahmefuge durch den Filetabweiser hindurch erstrecken können. So kann das Filet von dem Filetabweiser oberhalb und unterhalb der Fleischgräten von der Wirbelsäule in seitlicher Richtung weg bewegt werden.

Weiter bevorzugt erstreckt sich die Aufnahmefuge derart gewinkelt zur Längsachse des Filetabweisers, dass sie sich ausgehend von einem ersten Längsende des Filetabweisers in einer Richtung normal zu der Quererstreckung von der Längsachse entfernt, entlang derer ein auf der Aufnahme aufgenommener Fisch mit seiner Wirbelsäule relativ zu dem Filetabweiser bewegt wird. Bevorzugt verläuft die Aufnahmefuge dabei nach oben, wenn die Fische in ihrer Schwimmlage verarbeitet werden. Dies bewirkt, dass beim Vorschub der Fische auf dem Filetabweiser die Fleischgräten, während das Filet in seitlicher Richtung von den Fleischgräten abgezogen wird, gleichzeitig in einer Richtung normal zur seitlichen Bewegungsrichtung der Filets umgelenkt werden, d. h. insbesondere nach oben umgelenkt werden. Dadurch wird die Bewegung der Fleischgräten aus dem Filet heraus verbessert und unterstützt.

Gemäß einer weiteren bevorzugten Ausführungsform ist seitlich jedes Filetabweisers jeweils ein Messer in Form eines Flankenschabers angeordnet, welches bei Relativbewegung zu einem auf der Aufnahme aufgenommenen Fisch im Bereich der Bauchhöhle des Fisches zwischen die Flankengräten und das angrenzende Filet eintritt und die Flankengräte von dem Filet freischneidet. Derartige Flankenschaber sind bekannt. Anstelle eines Flankenschabers könnten z. B. bei Weißfisch auch Kreismesser oder anders geformte Schaber zum Freischneiden der Flankengräten zum Einsatz kommen. Erfindungsgemäß sind sie vorzugsweise derart seitlich der Filetabweiser angeordnet, dass sie an den einander abgewandten Außenseiten der beiden Filetabweiser gelegen sind. Dabei liegen die vorderen Enden der Flankenschaber bevorzugt vor den vorderen ersten Längsenden der Filetabweiser, sodass im Bereich der Bauchhöhle zuerst die Flankenschaber in das Fleisch eintreten und so die Filets von den Flankengräten abtrennen, während nachfolgend die Filetabweiser eingeführt werden und dann das Filet seitlich von den Gräten und somit auch den Flankengräten weg bewegen.

Nachfolgend wird die Erfindung beispielhaft anhand der beigefügten Figuren beschrieben. In diesen zeigt:
- Fig. 1: einen Querschnitt durch den geköpften und geschlachteten Fisch im Bereich der Bauchhöhle,
- Fig. 2: die Durchführung des Rückenschnittes,
- Fig. 3: die Wirkung der Filetabweiser in den Schnittfugen der Rückenmesser,
- Fig. 4: die Wirkung der Filetabweiser im weiteren Bearbeitungsverlauf,
- Fig. 5: die Wirkung der Filetabweiser im weiteren Bearbeitungsverlauf,
- Fig. 6: die Wirkung der Filetabweiser im weiteren Bearbeitungsverlauf,
- Fig. 7: eine Draufsicht auf die Filetabweiser,
- Fig. 8: den Schnitt C-D durch die Filetabweiser gemäß Fig. 7,
- Fig. 9: den Schnitt E-F durch die Filetabweiser gemäß Fig. 7,
- Fig. 10: die Ansicht A gemäß Fig. 7,
- Fig. 11: die Ansicht B gemäß Fig. 7,
- Fig. 12: die Längsansicht eines Filetabweisers mit Flankenschaber, und
- Fig. 13: die Zuführung eines Fisches zum Filetabweiser gemäß Fig. 12.

Verfahren und Vorrichtung nach diesem Patent sind vorzugsweise einer Fischbearbeitungsmaschine zum maschinellen Gewinnen des Fleisches von geschlachteten und an der Bauchhöhle geöffneten Fischen verwirklicht. Bei den zu bearbeitenden Fischen handelt es sich insbesondere um Fischarten, die sich von der Wirbelsäule in das Fischfleisch erstreckende Fleischgräten (Pinbones) aufweisen, beispielsweise Lachs und Weißfische.

Der Fisch wird zunächst geköpft. Der nunmehr kopflose Fisch wird dann an den Filetierprozess übergeben, in welchem er mit dem Schwanzende voraus in Längsrichtung durch die weiteren Bearbeitungsgänge gefördert wird.

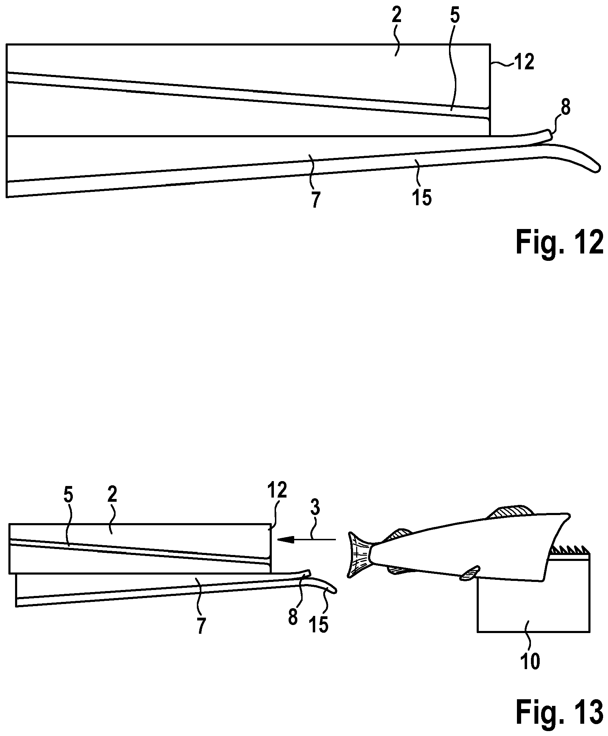

Zunächst werden in bekannter Weise Schnitte zwischen den Rückengräten und den sich bauchwärts erstreckenden Gräten und dem Filet eingebracht, um diese Gräten vom Filet freizuschneiden. Dazu wird der Fisch relativ zu den feststehenden, ggf. rotierenden Messern auf einen linear beweglichen Sattel 10 (siehe Fig. 13) in seiner Schwimmlage durch die Maschine bzw. Vorrichtung verfahren.

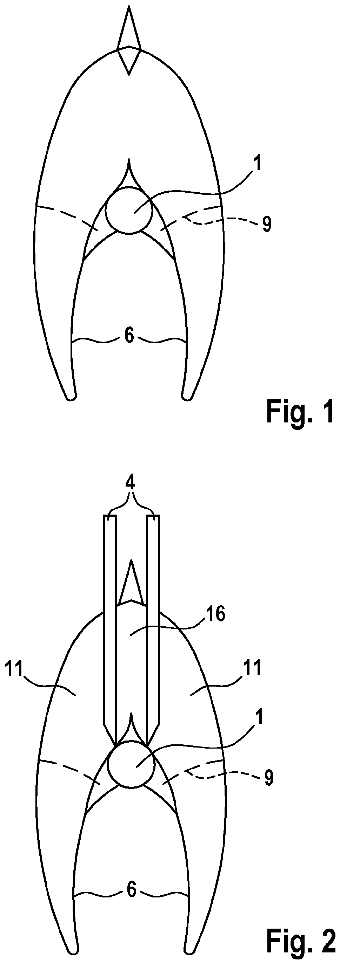

Fig. 1 zeigt einen Schnitt durch den Fisch im Bereich der Bauchhöhle, in welchem die Wirbelsäule 1 und die Fleischgräten 9 sowie die seitlich der Bauchhöhle gelegenen Flankengräten 6 zu sehen sind.

Durch paarweise im Abstand angeordnete rotierende Rückenmesser 4 werden die Rückenspeichen bzw. -gräten des Fisches durch jeweils bis an die Wirbelsäule 1 oder die Fleischgräte 9 geführte Einschnitte freigeschnitten. Dabei enden die so gebildeten Rückenschnitte oberhalb der Fleischgräten 9, sodass diese nicht von der Wirbelsäule 1 getrennt werden. Weiterhin werden in bekannter Weise von der Bauchseite bis an die Wirbelsäule 1 reichende Bauchschnitte und vom Schwanzende bis an das Bauchhöhlenende reichende Trennschnitte durchgeführt.

So werden die Filets 11 von den Rückengräten sowie den sich bauchwärts erstreckenden Gräten sowie den Flankengräten 6 abgetrennt, wobei die Fleischgräten 9 mit der Wirbelsäule 1 bzw. im Fall von Weißfischen mit den Flankengräten verbunden bleiben und zunächst noch in den Filets 11 stecken.

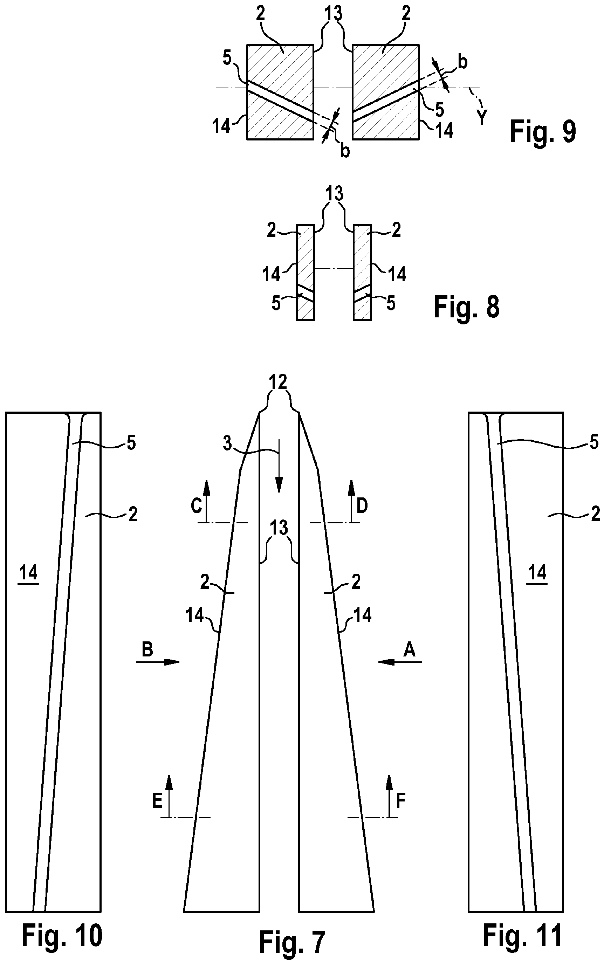

Der weitere Transport des Fisches erfolgt in der geöffneten Bauchhöhle beiderseits der Wirbelsäule 1 abgestützt auf dem Sattel 10 mit dem Schwanzende voraus. Der Fisch gelangt nunmehr in die Wirkungsbereiche zweier beiderseits der Bewegungsbahn 3 der Wirbelsäule 1 angeordneter Bearbeitungswerkzeuge, wie in Fig. 13 dargestellt. Diese sind, wie in Fig. 8 - 12 dargestellt, im oberen Bereich als keilförmige Filetabweiser 2 ausgebildet. Die Filetabweiser 2 verbreitern sich ausgehend von einem ersten Längsende 12 über ihre Längserstreckung in der Längsrichtung 3, welche der Vorschubrichtung der Fische entlang der Filetabweiser 2 entspricht. Dabei ist die Breitenrichtung, in welcher sich die Filetabweiser 2 verbreitern, eine Richtung quer zu der Bewegungsrichtung 3. D. h. bei der hier gezeigten Verarbeitung der Fische in ihrer Schwimmlage verbreitern sich die Filetabweiser 2 in seitlicher horizontaler Richtung. Die ersten Enden 12 bilden die Enden, welche zuerst mit dem Fisch in Kontakt kommen und sind daher spitz ausgebildet, sodass sie in die zuvor gebildeten Schnitte bzw. die von den Schnitten gebildeten Trennfugen eintreten können. Die Breitenzunahme wird besonders deutlich anhand der Schnitte in den Figuren 8 und 9, welche entlang der Linien C-D und E-F in Fig. 7 verlaufen. In ihrem oberen Verlauf fluchten die Filetabweiser 2 mit den durch die Rückenmesser 4 erzeugten Trennfugen.

In ihrem mittleren Teil weisen die Filetabweiser 2 jeweils eine sich über die Länge der Filetabweiser 2 erstreckende Aufnahmefuge 5 auf. Die Aufnahmefugen 5 verlaufen dabei geneigt zu der Querausdehnung Y der Filetabweiser 2 (siehe Fig. 9) und haben bevorzugt eine Breite b zwischen 1 - 3 mm, können gegebenenfalls aber auch breiter ausgebildet sein. Dabei verlaufen die Aufnahmefugen 5 ausgehend von den einander zugewandten Innenseiten 13 der beiden Filetabweiser 2 jeweils nach oben geneigt zur Außenseite 14 der Filetabweiser 2. Die Aufnahmefugen 5 erstrecken sich somit in der Querausdehnung der Filetabweiser 2 vollständig durch diese hindurch. Die Neigung bzw. Steigung zur Querachse Y nimmt dabei ausgehend vom ersten Längsende 12 der Filetabweiser 2 zu, sodass sich an den in Fig. 10 und 11 gezeigten Außenseiten 14 der Filetabweiser 2 ein vertikal ansteigender Verlauf der Aufnahmefugen 5 ergibt. Im unteren Bereich seitlich der Außenseiten 14 der Filetabweiser sind jeweils Flankenschaber 7 angeordnet, die in ihrem der Bewegungsrichtung 3 dem Fisch entgegen gerichteten Teil mit einer Schneide 8 versehen sind.

Die Flankenschaber 7 treten mit ihrer Schneide 8 im Bereich der Bauchhöhle zwischen die Flankengräten 6 und das Filet 11 ein und schaben das Filet 11 so von den Flankengräten 6 ab. Die Flankengräten 6 werden dabei zwischen dem Flankenschaber 7 und einer neben dem Schabermesser bzw. Flankenschaber 7 verlaufenden Gegenlage 15 geführt. Die Schneide 8 des Flankenschabers 7 liegt vor dem ersten Längsende 12 des Filetabweisers 2, sodass zunächst die Schneide 8 in das Fleisch eintritt, bevor das erste Längsende 12 des Filetabweisers 2 in die ausgebildeten Schnitte zwischen Gräten und Filets 11 eintritt. Anstelle solcher Flankenschaber können zum Freischneiden der Flankengräten auch andere Schneideinrichtungen, wie Kreismesser, Verwendung finden.

Während der Fisch auf dem Sattel 10 mit dem Schwanzende voraus weiter durch die Bearbeitungsstrecke geschoben wird, dringen dann die beiderseitigen Filetabweiser 2 in die durch die Rückenmesser 4 erzeugten Schnittfugen und verbreitern diese aufgrund ihrer beschriebenen keilförmigen Form kontinuierlich keilförmig. Gleichzeitig dringt die Schneide 8 weiter dicht oberhalb der Flankengräten 6 in das Fischfleisch. Im weiteren Verlauf stützt sich der Flankenschaber 7 auf den Flankengräten 6 ab und gleitet dann auf diesen entlang. Im weiteren Verlauf der Bearbeitung treten dann die Filetabweiser 2 auch in die so gebildeten Flankenschnitte bzw. Trennschnitte zwischen dem Filet 11 und den Flankengräten 6 ein. Im Bereich des Schwanzendes, d. h. zwischen Schwanzende und Bauchhöhle sind zuvor die Filetabweiser 2 in die seitlich der Bauchgräten ausgebildeten Trennschnitte, welche mit hier nicht gezeigten Messern von der Unterseite her ausgebildet werden, eingetreten. Dabei werden auch die durch die Trennschnitte entstandenen unteren Schnittfugen in Längsrichtung der Fische keilförmig und kontinuierlich verbreitert.

Hierbei bewegen sich die Fleischgräten (Pinbones) 9 innerhalb der Aufnahmefugen 5. Im weiteren Verlauf werden beide seitlichen Filets 11 gänzlich in Schwimmlage des Fisches gesehen horizontal und in einer Richtung Y quer zur Wirbelsäule 1 seitlich verdrängt und dabei vom Grätengerüst bzw. Skelett abgestreift und von den Fleischgräten 9 abgezogen.

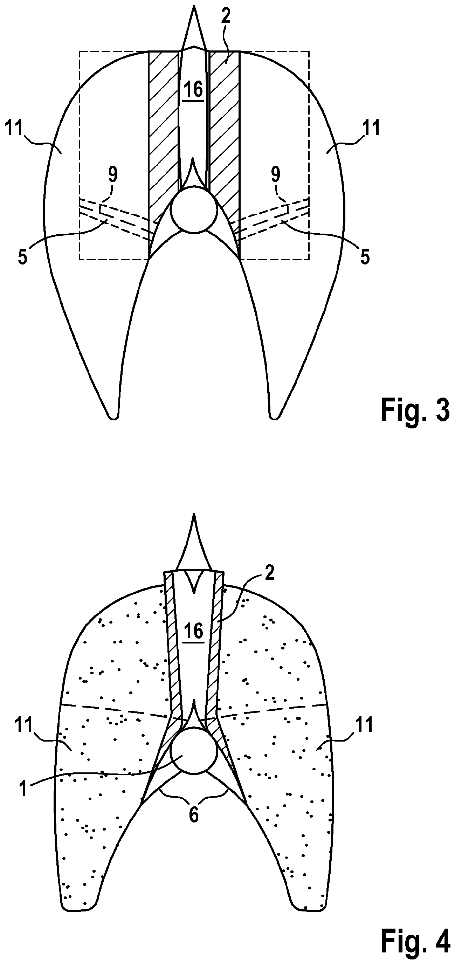

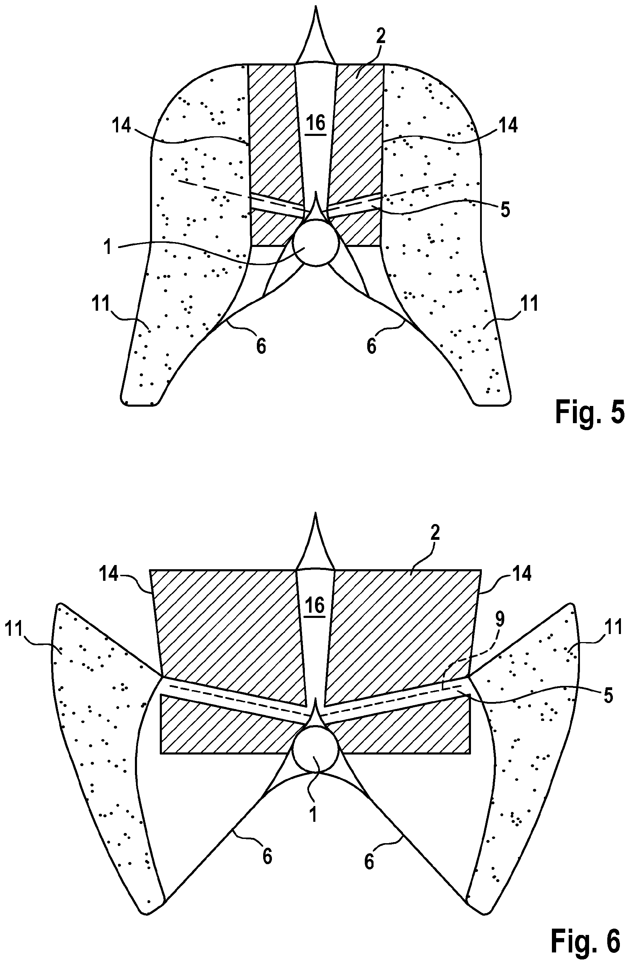

Das Aufweiten ist anhand des in Fig. 1 - 6 gezeigten Querschnitts des Fisches im Bereich der Bauchhöhle zu erkennen. Der Querschnitt befindet sich dabei an derselben Position im Fisch. Nach dem Einbringen der Schnitte, die in Fig. 2 dargestellt sind, dringen die Filetabweiser 2 in die von den Messern 4 gebildeten Schnitte bzw. Trennfugen ein, sodass die Rückengräte 16 zwischen den Filetabweisern 2 gelegen ist. Entsprechend sind auch die hier nicht gezeigten Bauchgräten im Bereich des Schwanzendes zwischen den Filetabweisern 2 gelegen. Mit ihren Außenseiten 14 liegen die Filetabweiser 2 an den Innenseiten der Filets 11 an (siehe Fig. 5 und 6) und drücken die Filets auseinander und von der Wirbelsäule 1 und der Rückengräte 16 weg. Die Fleischgräten 9 werden dabei in den Aufnahmefugen geführt, wobei sie durch den schrägen Verlauf der Aufnahmefugen 5, wie er in Fig. 10 und 11 dargestellt ist, noch nach oben abgelenkt werden, wodurch die Herausziehbewegung der Fleischgräten 9 aus den Filets 11 weiter unterstützt wird, was jedoch in Fig. 5 und 6 nicht dargestellt ist.

### Bezugszeichenliste

- 1: - Wirbelsäule
- 2: - Filetabweiser
- 3: - Bewegungsrichtung
- 4: - Rückenmesser
- 5: - Aufnahmefugen
- 6: - Flankengräten
- 7: - Flankenschaber
- 8: - Schneide
- 9: - Fleischgräten (Pinbones)
- 10: - Sattel
- 11: - Filets
- 12: - erstes Längsende der Filetabweiser 2
- 13: - Innenseiten
- 14: - Außenseiten
- 15: - Gegenlage
- 16: - Rückengräte
- b: - Breite
- Y: - Querrichtung

## Patentansprüche

1. Verfahren zum maschinellen Gewinnen des Fleisches von Fischen, bei welchem durch das Einbringen von Schnitten die Rückengräten (16) und die bauchwärts gerichteten Gräten von den seitlich gelegen Filets (11) freigeschnitten werden, ohne die Fleischgräten (9) von der Wirbelsäule (1) zu trennen, **dadurch gekennzeichnet, dass** anschließend der Fisch in seiner Längsrichtung (3) mit einem Längsende voran auf zwei sich in Längsrichtung (3) erstreckende und in einer Richtung (Y) quer zu dieser Längsrichtung (3) keilförmig erweiternde Filetabweiser (2) aufgeschoben wird, welche dabei in die von den Schnitten gebildeten Trennfugen eintreten und diese verbreitern, wobei die Fleischgräten (9) in Längsschlitze bildende Aufnahmefugen (5) in den Filetabweisern (2) bei deren Vorschub geführt werden, wobei die seitlichen Filets (11) in seitlicher Richtung (Y) quer zu den Rückengräten (16) von der Wirbelsäule (1) des Fisches wegbewegt werden, wobei die Filets (11) von den sich seitlich von der Wirbelsäule (1) oder den Flankengräten (6) wegerstreckenden Fleischgräten (9) abgezogen werden.

2. Verfahren nach Anspruch 1, bei welchem als Schnitte im Bereich des Fischrückens zwei sich in Längsrichtung des Fisches erstreckende, die Rückengräten (16) freischneidende Rückenschnitte, im Bereich der Bauchhöhle zwei die Flankengräten (6) freischneidende Flankenschnitte und zwei vom Schwanzende bis an das Bauchhöhlenende reichende, sich in Längsrichtung des Fisches erstreckende und die bauchwärts gerichteten Gräten freischneidende Trennschnitte eingebracht werden.

3. Verfahren nach Anspruch 1 oder 2, bei welchem die Trennfugen vom Längsende des Fisches, vorzugsweise vom Schwanzende des Fisches ausgehend verbreitert werden.

4. Verfahren nach einem der vorangehenden Ansprüche, bei welchem die Rückenschnitte oberhalb der Fleischgräten (9) enden.

5. Verfahren nach einem der vorangehenden Ansprüche, bei welchem die Filets (11) in einer seitlichen Richtung (Y) rechtwinklig zu den Rückengräten (16) und zur Wirbelsäule (1) von diesen wegbewegt werden.

6. Verfahren nach einem der vorangehenden Ansprüche, bei welchem die Filets (11) in seitlicher Richtung (Y) spitzwinklig zur Wirbelsäule (1) von dieser wegbewegt werden.

7. Vorrichtung zum maschinellen Gewinnen des Fleisches von Fischen mit einer Aufnahmeeinrichtung (10), welche ausgebildet ist zur Aufnahme und zum Halten der zu verarbeitenden Fische, mit Messern (4), welche angeordnet und ausgebildet sind zum Einbringen von Schnitten, welche die Rückengräten (16) und die bauchwärts gerichteten Gräten (6) von den seitlich gelegen Filets (11) freischneiden, **dadurch gekennzeichnet, dass** die Vorrichtung zwei Filetabweiser (2) aufweist, welche relativ zu der Aufnahmeeinrichtung (10) derart bewegbar sind, dass sie in die von den Schnitten gebildeten Trennfugen eintreten und eine seitliche Bewegung der Filets (11) quer zu den Rückengräten (16) des Fisches und weg von der Wirbelsäule (1) veranlassen, wobei die Filetabweiser (2) derart keilförmig ausgebildet sind, dass sie sich ausgehend von einem ersten Längsende (12) zu einem zweiten Längsende quer zur Längsrichtung (3) verbreitern, und wobei die Filetabweiser (2) jeweils eine über die Längserstreckung des Filetabweisers verlaufende und sich in ihrer Querausdehnung (Y) quer zu der Längserstreckung durch den Filetabweiser (2) hindurch erstreckende, einen Längsschlitz bildende Aufnahmefuge (5) aufweisen, welche derart angeordnet ist, dass bei Relativbewegung des Fisches die Fleischgräten (9) in der Aufnahmefuge (5) geführt werden.

8. Vorrichtung nach Anspruch 7, bei welcher die Aufnahmeeinrichtung (10) zum Fördern des aufgenommenen Fisches in dessen Längsrichtung bewegbar ist.

9. Vorrichtung nach Anspruch 7 oder 8, bei welcher die Aufnahmeeinrichtung relativ zu den Messern (4) derart bewegbar ist, dass die Messer (4) durch das Fleisch des aufgenommenen Fisches geführt werden.

10. Vorrichtung nach einem der Ansprüche 7 bis 9, bei welcher die Messer (4) derart angeordnet und/oder geführt sind, dass die sich von der Wirbelsäule (1) oder den Flankengräten (6) des Fisches seitlich wegerstreckenden Fleischgräten (9) von den Messern (4) nicht durchschnitten werden.

11. Vorrichtung nach einem der Ansprüche 7 bis 10, welche zwei beabstandete Rückenmesser (4) aufweist, welche angeordnet und ausgebildet sind zum Einbringen zweier Rückenschnitte seitlich der Rückengräten (16) des Fisches, so dass diese von den seitlichen Filets (11) freigeschnitten werden, wobei die Rückenmesser (4) oberhalb der Fleischgräten (9) gelegen sind, so dass diese nicht durchtrennt werden.

12. Vorrichtung nach einem der Ansprüche 7 bis 11, welche Messer aufweist, welche angeordnet und ausgebildet sind zum Ausfuhren von unten geführter Schnitte, insbesondere zweier im Bereich der Bauchhöhle die Flankengräten (6) freischneidenden Flankenschnitte und zweier vom Schwanzende bis an das Bauchhöhlenende reichender, sich in Längsrichtung (3) des Fisches erstreckender und die bauchwärts gerichteten Gräten freischneidender Trennschnitte.

13. Vorrichtung nach einem der Ansprüche 7 bis 12, bei welcher die Filetabweiser (2) in Längsrichtung (3) eines auf die Aufnahmeeinrichtung aufgenommenen Fisches feststehend angeordnet sind.

14. Vorrichtung nach einem der Ansprüche 7 bis 13, bei welcher sich die Filetabweiser um ein Maß verbreitern, welches größer als die Länge der Fleischgräten (9) der zu verarbeitenden Fische ist.

15. Vorrichtung nach einem der Ansprüche 7 bis 14, bei welcher die Filetabweiser (2) in einer Vorschubrichtung der Fische jeweils hinter zumindest einem Messer (4) angeordnet sind und vorzugsweise mit diesem Messer (4) fluchten.

16. Vorrichtung nach einem der Ansprüche 7 bis 15, bei welcher die Aufnahmefuge (5) derart gewinkelt zur Längserstreckung des Filetabweisers (2) verläuft, dass sie sich ausgehend von einem ersten Längsende (12) des Filetabweisers in einer Richtung normal zu der Quererstreckung (Y) von einer Längsachse entfernt, entlang derer ein auf der Aufnahme aufgenommener Fisch mit seiner Wirbelsäule (1) relativ zu dem Filetabweiser (2) bewegt wird.

17. Vorrichtung nach einem der Ansprüche 7 bis 16, bei welcher seitlich der Filetabweiser (2) jeweils ein Messer in Form eines Flankenschabers (7) angeordnet ist, welches bei Relativbewegung zu einem auf der Aufnahme (10) aufgenommenen Fisch im Bereich der Bauchhöhle des Fisches zwischen die Flankengräten (6) und das angrenzende Filet (11) eintritt und die Flankengräten (6) von dem Filet (11) freischneidet.

## Claims

1. Method for mechanically recovering flesh from fish, in which by introducing incisions, the dorsal bones (16) and the ventrally directed bones are cut free from the laterally located fillets (11) without separating the pin bones (9) from the spine (1) **characterized in that** the fish in its longitudinal direction (3) is then pushed with one longitudinal end first onto two wedge-shaped fillet deflectors (2) extending longitudinally (3) and expanding in a direction (Y) transverse to this longitudinal direction (3), said deflectors thus entering the separating gaps formed by the incisions and widening them, wherein the pin bones (9) are guided in receiving grooves (5) forming longitudinal slits in the fillet deflectors (2) during their infeed, wherein the lateral fillets (11) are moved away from the spine (1) of the fish in the lateral direction (Y) transverse to the dorsal bones (16), wherein the fillets (11) are peeled away from the pin bones (9) extending laterally out from the spine (1) or the flank bones (6).

2. Method according to claim 1, wherein two dorsal incisions extending in the longitudinal direction of the fish, cutting free the dorsal bones (16) in the region of the fish back, two flank incisions cutting free the flank bones (6) in the region of the abdominal cavity and two separating incisions reaching from the tail end up to the end of the abdominal cavity, extending in the longitudinal direction of the fish and cutting free the ventrally directed bones are introduced as incisions.

3. Method according to claim 1 or 2, wherein the separating gaps are expanded starting from the longitudinal end of the fish, preferably from the tail end of the fish.

4. Method according to any one of the preceding claims, wherein the dorsal incisions end above the pin bones (9).

5. Method according to any one of the preceding claims, wherein the fillets (11) are moved in a lateral direction (Y) transverse to the dorsal bones (16) and to the spine (1) away from said bones.

6. Method according to any one of the preceding claims, wherein the fillets (11) are moved in a lateral direction (Y) at an acute angle to the spine (1) away from said spine.

7. Apparatus for mechanically recovering flesh from fish comprising a receiving device (10), which is designed to receive and hold the fish to be processed, with knives (4), which are arranged and configured to introduce incisions that cut free the dorsal bones (16) and the ventrally directed bones (6) from the laterally located fillets (11),
**characterized in that** the apparatus has two fillet deflectors (2), which are movable relative to the receiving device (10) in such a way that they enter the separating gaps formed by the incisions and bring about a lateral movement of the fillets (11) transverse to the dorsal bones (16) of the fish and away from the spine (1), wherein the fillet deflectors (2) are designed to be wedge-shaped in such a manner that they widen starting from a first longitudinal end (12) to a second longitudinal end transverse to the longitudinal direction (3), and wherein the fillet deflectors (2) each comprise a receiving groove (5) forming a longitudinal slit running across the longitudinal extension of said fillet deflector and extending through said fillet deflector (2) in its transverse extension (Y) transverse to the longitudinal extension which is arranged in such a manner that the pin bones (9) are guided into the receiving groove (5) during relative movement of the fish.

8. Apparatus according to claim 7, wherein the receiving device (10) is movable for conveying the received fish in its longitudinal direction.

9. Apparatus according to claim 7 or 8, wherein the receiving device is movable relative to the knives (4) in such a way that the knives (4) are guided through the flesh of the received fish.

10. Apparatus according to any one of claims 7 to 9, wherein the knives (4) are arranged and/or guided in such a manner that the pin bones (9) extending laterally out from the spine (1) or the flank bones (6) of the fish are severed by said knives (4).

11. Apparatus according to any one of claims 7 to 10, comprising two dorsal knives (4) spaced apart which are arranged and configured to introduce two dorsal incisions laterally to the dorsal bones (16) of the fish such that said dorsal bones are cut free from the lateral fillets (11), wherein the dorsal knives (4) are situated above the pin bones (9) such that they are not severed.

12. Apparatus according to any one of claims 7 to 11, comprising knives which are arranged and configured to perform incisions guided from below, in particular two flank incisions cutting free the flank bones (6) in the abdominal cavity region and two separating incisions reaching from the tail end up to the end of the abdominal cavity, extending in the longitudinal direction (3) of the fish and cutting free the ventrally directed bones.

13. Apparatus according to any one of claims 7 to 12, wherein the fillet deflectors (2) are arranged fixedly in the longitudinal direction (3) of a fish received on the receiving device.

14. Apparatus according to any one of claims 7 to 13, wherein the fillet deflectors widen by an amount which is greater than the length of the pin bones (9) of the fish to be processed.

15. Apparatus according to any one of claims 7 to 14, wherein the fillet deflectors (2) are each arranged downstream of at least one knife (4) in an infeed direction of the fish and are preferably aligned with this knife (4).

16. Apparatus according to any one of claims 7 to 15, wherein the receiving groove (5) runs at an angle to the longitudinal extension of the fillet deflector (2) in such a manner that, starting from a first longitudinal end (12) of said fillet deflector, it moves away from a longitudinal axis in a direction perpendicular to the transverse extension (Y), along which a fish received on the receiving device is moved with its spine (1) relative to the fillet deflector (2).

17. Apparatus according to any one of claims 7 to 16, wherein a knife in the form of a flank scraper (7) is arranged in each case laterally to the fillet deflectors (2), which knife, during a movement relative to a fish received on the receiving device (10), enters between the flank bones (6) and the adjacent fillet (11) in the region of the abdominal cavity of said fish and cuts the flank bones (6) free from the fillet (11).

## Revendications

1. Procédé pour extraire mécaniquement la chair de poissons, dans lequel le fait d'effectuer des coupes permet de dégager des filets latéraux (11) les arêtes dorsales (16) et les arêtes dirigées vers l'abdomen sans séparer les arêtes intramusculaires (9) de la colonne vertébrale (1), **caractérisé en ce qu'**ensuite, le poisson est poussé dans le sens de sa longueur (3) avec une extrémité longitudinale en avant sur deux déflecteurs de filet (2) s'étendant dans le sens de la longueur (3) et s'agrandissant en forme de clavette dans un sens (Y) transversal audit sens de la longueur (3), lesquels déflecteurs pénètrent à cet égard dans les joints de séparation formés par les coupes et les élargissent, les arêtes intramusculaires (9) étant conduites dans des joints de logement (5) formant des fentes longitudinales dans les déflecteurs de filet (2) au moment de leur avancée, les filets latéraux (11) étant écartés de la colonne vertébrale (1) du poisson dans le sens latéral (Y) transversal aux arêtes dorsales (16), les filets (11) étant retirés des arêtes intramusculaires (9) qui s'écartent latéralement de la colonne vertébrale (1) ou des arêtes de flanc (6).

2. Procédé selon la revendication 1, dans lequel les coupes effectuées sont, dans la zone dorsale du poisson, deux coupes dorsales s'étendant dans le sens de la longueur du poisson et dégageant les arêtes dorsales (16), dans la zone de la cavité abdominale, deux coupes de flanc dégageant les arêtes de flanc (6) et deux coupes de séparation allant de l'extrémité de la queue à l'extrémité de la cavité abdominale, s'étendant dans le sens de la longueur du poisson et dégageant les arêtes dirigées vers l'abdomen.

3. Procédé selon la revendication 1 ou 2, dans lequel les joints de séparation sont élargis à partir de l'extrémité longitudinale du poisson, de préférence en partant de l'extrémité de la queue du poisson.

4. Procédé selon l'une quelconque des revendications précédentes, dans lequel les coupes dorsales se terminent au-dessus des arêtes intramusculaires (9).

5. Procédé selon l'une quelconque des revendications précédentes, dans lequel les filets (11) sont écartés des arêtes dorsales (16) et de la colonne vertébrale (1) dans un sens latéral (Y) perpendiculaire à celles-ci.

6. Procédé selon l'une quelconque des revendications précédentes, dans lequel les filets (11) sont écartés de la colonne vertébrale (1) dans le sens latéral (Y) dans un angle aigu à celle-ci.

7. Dispositif destiné à extraire par voie mécanique la chair de poisson, doté d'un dispositif de logement (10) qui est conçu pour recevoir et pour tenir les poissons à traiter, de couteaux (4) qui sont agencés et conçus pour effectuer des coupes qui dégagent les arêtes dorsales (16) et les arêtes (6) dirigées vers l'abdomen des filets (11) latéraux, **caractérisé en ce que** le dispositif présente deux déflecteurs de filet (2) qui sont susceptibles d'être déplacés par rapport au dispositif de logement (10) de telle sorte qu'ils pénètrent dans les joints de séparation formés par les coupes et provoquent un déplacement latéral des filets (11) à la transversale des arêtes dorsales (16) du poisson et s'écartant de la colonne vertébrale (1), les déflecteurs de filet (2) étant conçus en forme de clavette de telle sorte qu'ils s'élargissent à partir d'une première extrémité longitudinale (12) vers une deuxième extrémité longitudinale à la transversale du sens de la longueur (3), et les déflecteurs de filet (2) présentant chacun un joint de logement (5) formant une fente longitudinale s'étendant sur toute la longueur du déflecteur de filet et s'étirant dans sa dimension transversale (Y) à la transversale du sens de la longueur au travers du déflecteur de filet (2), lequel joint est agencé de telle sorte que lors d'un déplacement relatif du poisson, les arêtes intramusculaires (9) sont conduites dans le joint de logement (5).

8. Dispositif selon la revendication 7, dans lequel le dispositif de logement (10) est susceptible d'être déplacé pour le convoyage du poisson logé, dans le sens longitudinal de celui-ci.

9. Dispositif selon la revendication 7 ou 8, dans lequel le dispositif de logement est susceptible d'être déplacé par rapport aux couteaux (4) de telle sorte que les couteaux (4) sont conduits à travers la chair du poisson logé.

10. Dispositif selon l'une quelconque des revendications 7 à 9, dans lequel les couteaux (4) sont agencés et/ou conduits de telle sorte que les arêtes intramusculaires (9) s'écartant latéralement de la colonne vertébrale (1) ou des arêtes de flanc (6) du poisson ne sont pas tranchées par les couteaux (4).

11. Dispositif selon l'une quelconque des revendications 7 à 10, qui présente deux couteaux dorsaux (4) espacés l'un de l'autre, lesquels sont agencés et conçus pour effectuer deux coupes dorsales latéralement aux arêtes dorsales (16) du poisson, de telle sorte que celles-ci sont dégagées des filets latéraux (11), les couteaux dorsaux (4) étant disposés au-dessus des arêtes intramusculaires (9), de sorte que celles-ci ne sont pas tranchées.

12. Dispositif selon l'une quelconque des revendications 7 à 11, qui présente des couteaux qui sont agencés et conçus pour exécuter des coupes par en-dessous, notamment deux coupes de flancs dans la zone de la cavité abdominale, dégageant les arêtes de flanc (6), et deux coupes de séparation s'étendant dans le sens de la longueur (3) du poisson de l'extrémité de la queue à l'extrémité de la cavité abdominale et dégageant les arêtes dirigées vers l'abdomen.

13. Dispositif selon l'une quelconque des revendications 7 à 12, dans lequel les déflecteurs de filet (2) sont agencés de manière fixe dans le sens de la longueur (3) d'un poisson logé sur le dispositif de logement.

14. Dispositif selon l'une quelconque des revendications 7 à 13, dans lequel les déflecteurs de filet s'élargissent d'une dimension supérieure à la longueur des arêtes intramusculaires (9) des poissons à traiter.

15. Dispositif selon l'une quelconque des revendications 7 à 14, dans lequel les déflecteurs de filet (2) sont agencés dans un sens d'avancée des poissons chacun derrière au moins un couteau (4) et se trouvent de préférence dans le prolongement de ce couteau (4).

16. Dispositif selon l'une quelconque des revendications 7 à 15, dans lequel le joint de logement (5) forme un angle avec la longueur du déflecteur de filet (2) de telle sorte que ledit joint, à partir d'une première extrémité longitudinale (12) du déflecteur de filet, dans une direction normale par rapport à l'extension transversale (Y), s'éloigne d'un axe longitudinal le long duquel un poisson logé sur le logement est déplacé avec sa colonne vertébrale (1) par rapport au déflecteur de filet (2).

17. Dispositif selon l'une quelconque des revendications 7 à 16, dans lequel est agencé latéralement aux déflecteurs de filet (2) un couteau respectif sous forme d'un racleur de flanc (7) qui pénètre, lors d'un déplacement par rapport à un poisson logé sur le logement (10), dans la zone de la cavité abdominale du poisson entre les arêtes de flanc (6) et le filet (11) attenant, et dégage les arêtes de flanc (6) du filet (11).
